# EUROPÄISCHE PATENTANMELDUNG

(11) **EP 4 687 279 A1**
(43) Veröffentlichungstag der Anmeldung: **04.02.2026**
(21) Anmeldenummer: 24191509.9
(22) Anmeldetag: 29.07.2024
(51) Int. Cl.: H02M 7/5387, H02M 7/5395, H02M 1/00

(54) **ZUSTANDSÜBERWACHUNG FÜR UMRICHTER**

(71) Anmelder: Siemens Aktiengesellschaft, 80333 München (DE); Karlsruher Institut für Technologie, 76131 Karlsruhe (DE)
(72) Erfinder: Köllensperger, Peter, 90562 Heroldsberg (DE); Liske, Andreas, 76327 Pfinztal (DE); Schmitz-Rode, Benedikt, 76185 Karlsruhe (DE)
(74) Vertreter: Siemens Patent Attorneys

(57) **Zusammenfassung**

Mittels einer Umrichtersteuerung (6) eines Umrichters (4) werden mit einer Erfassungsfrequenz (f1) immer wieder Betriebsdaten (B) des Umrichters (4) erfasst. Aus den erfassten Betriebsdaten B) werden daraus abgeleitete Werte (B') ermittelt, die auf den jeweiligen Schaltzustand des Umrichters (4) bezogen und zeitlich gefiltert sind. Die abgeleiteten Werte (B') werden für eine durch ein Vollständigkeitskriterium (V) vorbestimmte Zeitspanne gespeichert. Weiterhin werden den gespeicherten abgeleiteten Werten (B') interne Werte (I) zugeordnet. Für die zwischengespeicherten abgeleiteten Werte (B') der durch das Vollständigkeitskriterium (V) vorbestimmten Zeitspanne und die zugeordneten internen Werte (I) werden Kenngrößen (K) ermittelt, die Anteile der zwischengespeicherten abgeleiteten Werte (B') bei vorbestimmten Frequenzen (f) charakterisieren. Für eine Anzahl an ermittelten Kenngrößen (K) werden gefilterte Kenngrößen (K') ermittelt. Die gefilterten Kenngrößen (K') werden zu einem Betriebspunkt (BP) des Umrichters (4) zusammengefasst. Weiterhin werden dem Betriebspunkt (BP) aus der Umgebung des Umrichters (4) stammende erfasste Messgrößen (M) zugeordnet. Mindestens ein Betriebspunkt (BP) und die zugehörigen Messgrößen (M) werden zu einem jeweiligen Übermittlungszeitpunkt an eine Recheneinrichtung (16) übermittelt.

## Beschreibung

Die vorliegende Erfindung geht aus von einem Monitoringverfahren für einen Umrichter,
- wobei mittels einer Umrichtersteuerung des Umrichters mit einer Erfassungsfrequenz immer wieder Betriebsdaten des Umrichters erfasst werden,
- wobei aus den erfassten Betriebsdaten des Umrichters abgeleitete Werte ermittelt werden,
- wobei Betriebspunkte und zugehörige Messgrößen zu jeweiligen Übermittlungszeitpunkten an eine Recheneinrichtung übermittelt werden.

In der Recheneinheit können eine Langzeitspeicherung und weitergehende Auswertungen vorgenommen werden. Die Langzeitspeicherung und die weitergehenden Auswertungen sind nicht mehr Bestandteil der vorliegenden Erfindung, sondern bauen auf der vorliegenden Erfindung auf.

Die Erfassungsfrequenz - dies gilt sowohl im Stand der Technik als auch im Rahmen der vorliegenden Erfindung - ist in aller Regel größer als 1 kHz. Beispielsweise kann die Erfassungsfrequenz bei 8 kHz oder 16 kHz liegen. Die Erfassungsfrequenz stimmt üblicherweise mit der Taktfrequenz überein, mit der die Umrichtersteuerung den Umrichter ansteuert. Die Betriebsdaten können beispielsweise Spannungen, Ströme, Temperaturen der Halbleiter (insbesondere deren Sperrschichttemperatur), eine Umgebungstemperatur, Sollwerte, ein Aussteuergrad der Halbleiter des Umrichters und andere mehr sein. Auch dies gilt sowohl im Stand der Technik als auch im Rahmen der vorliegenden Erfindung.

Die vorliegende Erfindung geht weiterhin aus von einem Steuerprogramm, wobei das Steuerprogramm Befehle umfasst, die bei ihrer Ausführung durch das Steuerungssystem das Steuerungssystem veranlassen, die Schritte eines derartigen Monitoringverfahrens auszuführen.

Die vorliegende Erfindung geht weiterhin aus von einem Steuerungssystem, wobei das Steuerungssystem mit einem derartigen Steuerprogramm programmiert ist, so dass das Steuerungssystem im Betrieb ein derartiges Monitoringverfahren ausführt.

Die genannten Gegenstände sind bekannt.

Das Monitoring (genauer eigentlich Condition Monitoring) von leistungselektronischen Systemen hat das Ziel, anhand der erfassten Daten die allmähliche Verschlechterung von Systemkomponenten des Umrichters ermitteln zu können. Zu diesem Zweck ist einerseits eine Überwachung und Datenerfassung über einen langen Zeitraum (10.000 Betriebsstunden und mehr) erforderlich. Andererseits fallen im Betrieb die Betriebsdaten des Umrichters in einem sehr kleinen zeitlichen Abstand von weniger als 1 ms an. In manchen Fällen liegt der zeitliche Abstand sogar unter 100 µs. Es kann sich somit, sofern die Betriebsdaten des Umrichters selbst betrachtet werden, über die Lebenszeit des Umrichters gesehen nach und nach eine sehr große Datenmenge ergeben.

Es ist theoretisch möglich, die gesamte Datenmenge zu speichern. Eine derartige Speicherung ist jedoch mangels entsprechender Speicherkapazität in der Umrichtersteuerung und auch in übergeordneten steuerungstechnischen Komponenten eines Steuerungssystems in der Regel nicht möglich. Die Daten müssten daher an eine Recheneinrichtung übermittelt werden. Diese Recheneinrichtung, die beispielsweise Bestandteil der sogenannten Cloud sein kann, kann entsprechende Datenmengen speichern.

Es ist jedoch nicht nur erforderlich, die Datenmenge zu speichern. Sofern die gesamte Datenmenge gespeichert werden soll, muss diese Datenmenge auch mit der Datenrate, in der sie auf der Steuerungsseite anfällt, an die Recheneinrichtung übermittelt werden. Dies erweist sich mangels entsprechender Kapazitäten zur Datenübertragung in der Praxis als unmöglich. Es ist daher erforderlich, entlang der Signalverarbeitungskette von der Umrichtersteuerung zur Recheneinrichtung eine Datenkompression vorzunehmen.

Die Erfassung der Betriebsdaten des Umrichters erfolgt durch die Umrichtersteuerung. Im Stand der Technik erfolgt ein Teil der Datenkompression üblicherweise dadurch, dass von der Umrichtersteuerung an eine übergeordnete Steuereinrichtung nur einer von n1 Werten übermittelt wird. Die übergeordnete Steuereinrichtung implementiert einen weiteren Teil der Datenkompression, indem sie nur einen von n2 Werten an eine Anlagensteuerung übermittelt. Von der Anlagensteuerung wiederum wird an die Recheneinrichtung nur einer von n3 Werten übermittelt wird. n1, n2 und n3 sind natürliche Zahlen oberhalb von 1 sind, meist deutlich oberhalb von 1. Alternativ ist es denkbar, dass die Umrichtersteuerung eine statistische Auswertung von n1 Werten vornimmt und durch die statistische Auswertung ermittelte statistische Kenngrößen wie beispielsweise einen Mittelwert und eine Streuung an die übergeordnete Steuereinrichtung übermittelt und die übergeordnete Steuereinrichtung und die Anlagensteuerung analoge Vorgehensweisen realisieren. Durch derartige Vorgehensweisen kann jedoch nicht sichergestellt werden, dass die entsprechenden Datenkompressionen alle relevanten Informationen über den Umrichter und dessen Betrieb erhalten. Vielmehr besteht die Gefahr, dass relevante Informationen verloren gehen.

Die Aufgabe der vorliegenden Erfindung besteht darin, Möglichkeiten zu schaffen, mittels derer trotz einer erheblichen Reduktion der Datenmenge entlang der Signalverarbeitungskette von der Umrichtersteuerung bis zur Recheneinheit sichergestellt ist, dass die relevanten Informationen über den Umrichter erhalten bleiben.

Die Aufgabe wird durch ein Monitoringverfahren mit den Merkmalen des Anspruchs 1 gelöst. Vorteilhafte Ausgestaltungen des Monitoringverfahrens sind Gegenstand der abhängigen Ansprüche 2 bis 6.

Erfindungsgemäß wird ein Monitoringverfahren geschaffen, bei dem vorgesehen ist,
- dass mittels einer Umrichtersteuerung des Umrichters mit einer Erfassungsfrequenz immer wieder Betriebsdaten des Umrichters erfasst werden,
- dass aus den erfassten Betriebsdaten des Umrichters abgeleitete Werte ermittelt werden, die auf den jeweiligen Schaltzustand des Umrichters bezogen und zeitlich gefiltert sind,
- dass die abgeleiteten Werte für eine durch ein Vollständigkeitskriterium vorbestimmte Zeitspanne gespeichert werden,
- dass den gespeicherten abgeleiteten Werten zusätzlich interne Werte zugeordnet werden,
- dass für die zwischengespeicherten abgeleiteten Werte der durch das Vollständigkeitskriterium vorbestimmten Zeitspanne und die zugeordneten internen Werte Kenngrößen ermittelt werden, die Anteile der zwischengespeicherten abgeleiteten Werte bei vorbestimmten Frequenzen charakterisieren,
- dass für eine Anzahl an ermittelten Kenngrößen gefilterte Kenngrößen ermittelt werden,
- dass die jeweils entgegengenommenen gefilterten Kenngrößen zu einem Betriebspunkt des Umrichters zusammenfasst werden und dem Betriebspunkt weiterhin aus der Umgebung des Umrichters stammende erfasste Messgrößen zugeordnet werden und
- dass mindestens ein Betriebspunkt und die zugehörigen Messgrößen zu einem jeweiligen Übermittlungszeitpunkt an eine Recheneinrichtung übermittelt werden.

Die Ermittlung der abgeleiteten Werte erfolgt üblicherweise durch die Umrichtersteuerung. Die Speicherung für die vorbestimmte Zeitspanne hingegen erfolgt üblicherweise durch eine der Umrichtersteuerung übergeordnete Steuereinrichtung. Gleiches gilt für die Zuordnung der internen Werte, die Ermittlung der Kenngrößen und die hierauf aufbauende Ermittlung der gefilterten Kenngrößen. Die Umrichtersteuerung übermittelt daher üblicherweise die abgeleiteten Werte an die übergeordnete Steuereinrichtung. Die übergeordnete Steuereinrichtung nimmt die abgeleiteten Werte entgegen.

Die Zusammenfassung der gefilterten Kenngrößen zu einem Betriebspunkt des Umrichters erfolgt üblicherweise durch eine der übergeordneten Steuereinrichtung übergeordnete Anlagensteuerung. Gleiches gilt für die Zuordnung der aus der Umgebung des Umrichters stammenden erfassten Messgrößen. Die übergeordnete Steuereinrichtung übermittelt daher die gefilterten Kenngrößen mit einer Übermittlungsfrequenz an eine Anlagensteuerung. Die Anlagensteuerung nimmt die gefilterten Kenngrößen entgegen. Die Übermittlung der Betriebspunkte und der zugehörigen Messgrößen an die Recheneinrichtung erfolgt dann ebenfalls durch die Anlagensteuerung.

Der Bezug auf den Schaltzustand impliziert, dass der Steuerungschip den jeweiligen Schaltzustand des Umrichters "kennt". Dieser Sachverhalt ist ohne weiteres gegeben, weil die Umrichtersteuerung den Umrichter steuert. Der Bezug auf den Schaltzustand impliziert weiterhin, dass der Schaltzustand sich maximal mit der Erfassungsfrequenz ändert, also beispielsweise bei einer Erfassungsfrequenz von 16 kHz mit 2 kHz oder 4 kHz oder auch 16 kHz, nicht aber mit beispielsweise 32 kHz.

Die durch das Vollständigkeitskriterium vorbestimmte Zeitspanne kann nach Bedarf bestimmt sein. In dem häufigen Fall, dass der Umrichter eine rotatorische elektrische Maschine, die einen Rotor und einen Stator aufweist, mit elektrischer Energie versorgt, kann die vorbestimmte Zeitspanne beispielsweise mit einer vorbestimmten Anzahl an vollständigen Umdrehungen des Rotors korrespondieren. In diesem Fall liegt die Anzahl an vollständigen Umdrehungen minimal bei 1. Sie kann aber auch bei 2, 3 oder mehr liegen. Üblicherweise entspricht die Anzahl an vollständigen Umdrehungen des Rotors einem Zeitrahmen von wenigen Millisekunden bis ca. 1 Sekunde. Bei einer Ankopplung an ein Wechselspannungsnetz kann die vorbestimmte Zeitspanne mit einer vorbestimmten Anzahl an Perioden des Wechselspannungsnetzes korrespondieren. Die vorbestimmte Zeitspanne kann aber auch anders definiert sein, insbesondere im Falle einer Anbindung an eine DC-Quelle oder eine DC-Last, beispielsweise eine Batterie oder eine Photovoltaikanlage.

Im Rahmen der Ermittlung der Kenngrößen, die Anteile der zwischengespeicherten abgeleiteten Werte bei vorbestimmten Frequenzen charakterisieren, kann beispielsweise für eine bestimmte Frequenz - beispielsweise eine Frequenz von 300 Hz - die Amplitude einer einzelnen Schwingung oder ein Verhältnis zweier Schwingungen relativ zueinander (beispielsweise deren Amplitudenverhältnis oder deren Phasenlage) werden. Diese Ermittlung wird von der ausführenden Einrichtung zusätzlich zu ihrer eigentlichen steuerungstechnischen Aufgabe durchgeführt.

Die Übermittlung der gefilterten Kenngrößen an die Anlagensteuerung erfolgt mit einer Übermittlungsfrequenz. Die Übermittlungsfrequenz liegt meist im Bereich zwischen 0,1 Hz und 10 Hz, oftmals bei ca. 1 Hz. Im Einzelfall sind aber auch größere oder kleinere Frequenzen möglich.

Im Rahmen der Zuordnung zu einem Betriebspunkt wird eine Klassifizierung und Zusammenfassung der gefilterten Kenngrößen vorgenommen.

Die Messgrößen können insbesondere für das Ausmaß an Kühlung des Umrichters relevant sein. Es kann sich beispielsweise um die Umgebungstemperatur, um die Luftfeuchtigkeit, um eine Intensität einer aktiven Kühlung des Umrichters (beispielsweise mittels eines Lüfters) und dergleichen handeln.

In der Regel liegt der zeitliche Abstand zwischen den Übermittlungszeitpunkten im Bereich zwischen 30 Sekunden und 5 Minuten.

Vorzugsweise erfolgt die Erfassung der Betriebsdaten des Umrichters mittels eines Mikrochips der Umrichtersteuerung, mittels dessen Steuerbefehle für Halbleiterschalter des Umrichters generiert werden. Diese Ausgestaltung ist besonders einfach und kostengünstig. Der Mikrochip kann insbesondere ein FPGA oder ein ASIC sein.

Vorzugsweise erfolgt im Falle der Erfassung der Betriebsdaten mittels des Mikrochips auch die Ermittlung der abgeleiteten Werte mittels des Mikrochips.

Vorzugsweise werden die Kenngrößen mittels einer Fourieranalyse und nachfolgendem Herausgreifen spezifischer Werte eines mittels der Fourieranalyse ermittelten Spektrums oder durch die Ermittlung ausschließlich von Fourierkoeffizienten bei den vorbestimmten Frequenzen oder durch Anwendung des Goertzel-Algorithmus auf die vorbestimmten Frequenzen ermittelt. Diese Ausgestaltungen sind einfach, zuverlässig und effizient. Weiterhin sind diese Algorithmen bereits häufig implementiert, so dass sie einfach verwendet werden können.

Vorzugsweise wird geprüft, ob die zu den jeweiligen Übermittlungszeitpunkten übermittelten Betriebspunkte und zugehörigen Messgrößen ein Basis-Stabilitätskriterium erfüllen. Bei Nichterfüllen des Basis-Stabilitätskriteriums wird ein zeitlicher Abstand der Übermittlungszeitpunkte verringert. Bei Erfüllen des Basis-Stabilitätskriteriums wird der zeitliche Abstand der Übermittlungszeitpunkte beibehalten oder vergrößert. Insbesondere diese Anpassung des zeitlichen Abstands gewährleistet, dass die relevanten Informationen erhalten bleiben und gleichzeitig die Menge an zu übertragenden und zu speichernden Daten minimiert wird.

Vorzugsweise wird in dem Fall, dass die zu den jeweiligen Übermittlungszeitpunkten übermittelten Betriebspunkte und zugehörigen Messgrößen das Basis-Stabilitätskriterium erfüllen, geprüft, ob die zu den jeweiligen Übermittlungszeitpunkten übermittelten Betriebspunkte und zugehörigen Messgrößen ein Zusatz-Stabilitätskriterium erfüllen. Bei Nichterfüllen des Zusatz-Stabilitätskriteriums wird der zeitliche Abstand der Übermittlungszeitpunkte beibehalten. Bei Erfüllen des Zusatz-Stabilitätskriteriums wird der zeitliche Abstand der Übermittlungszeitpunkte vergrößert. Dadurch wird die Datenrate der Datenübertragung zur Recheneinrichtung optimiert.

Die Stabilitätskriterien können nach Bedarf bestimmt sein. Insbesondere können die Stabilitätskriterien erfüllt sein, wenn und solange sich noch mehr oder minder glatte Verläufe ergeben. Sofern ein prinzipiell zu erwartendes Verhalten des Umrichters bekannt ist, können die Stabilitätskriterien alternativ oder zusätzlich auch dahingehend ausgelegt sein, zu prüfen, ob die übermittelten Betriebspunkte und Messgrößen exakt oder zumindest in etwa mit aufgrund des prinzipiell zu erwartenden Verhaltens des Umrichters vorhergesagten Werten korrespondieren. Es ist sogar möglich, ein Lernverhalten zu implementieren. Wenn beispielsweise eine Änderung erstmals auftritt, so würde dies als "problematisch" erkannt, das Basis-Stabilitätskriterium wäre also nicht erfüllt. Wenn aber danach gleichartige Änderungen immer wieder auftreten, kann die Anlagensteuerung dies lernen und die Stabilitätskriterien entsprechend anpassen bzw. nachführen. Das Basis-Stabilitätskriterium und das Zusatz-Stabilitätskriterium müssen natürlich stets derart aufeinander abgestimmt sein, dass das Zusatz-Stabilitätskriterium enger als das Basis-Stabilitätskriterium ist.

Die Aufgabe wird weiterhin durch ein Steuerprogramm mit den Merkmalen des Anspruchs 7 gelöst. Erfindungsgemäß veranlassen die Befehle bei ihrer Ausführung durch ein Steuerungssystem das Steuerungssystem dazu, ein erfindungsgemäßes Monitoringverfahren auszuführen. Das Steuerungssystem umfasst zumindest die Umrichtersteuerung, oftmals zusätzlich auch eine übergeordnete Steuereinrichtung und/oder eine Anlagensteuerung und gegebenenfalls innerhalb der Signalübertragungskette auch weitere Einrichtungen.

Die Wirkungen des Steuerprogramms korrespondieren mit denen des erfindungsgemäßen Monitoringverfahrens.

Die Aufgabe wird weiterhin durch ein Steuerungssystem mit den Merkmalen des Anspruchs 8 gelöst. Erfindungsgemäß ist bei einem Steuerungssystem der eingangs genannten Art das Steuerungssystem mit einem erfindungsgemäßen Steuerprogramm programmiert, so dass das Steuerungssystem in Betrieb ein erfindungsgemäßes Monitoringverfahren ausführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
FIG 1 ein Übersichtsbild und
FIG 2 bis 8 Ablaufdiagramme.

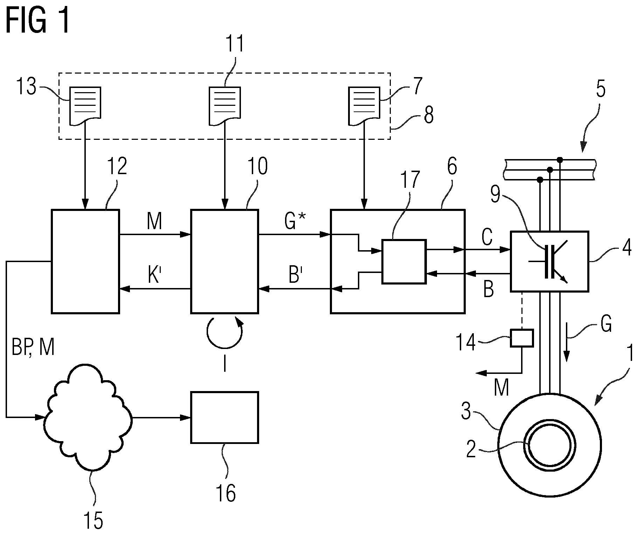

Gemäß FIG 1 ist eine Last 1 als rotatorische elektrische Maschine 1 ausgebildet, die einen Rotor 2 und einen Stator 3 aufweist. Die Last 1 wird über einen Umrichter 4 aus einer Energiequelle 5 mit elektrischer Energie versorgt. Als Energiequelle 5 ist in FIG 1 ein Drehstromnetz dargestellt. Die Energiequelle 5 könnte auch andersartig ausgebildet sein. Auch könnte die Last 1 eine andere Last als eine rotatorische elektrische Maschine sein. Der in FIG 1 dargestellte Fall ist jedoch der häufigste Fall.

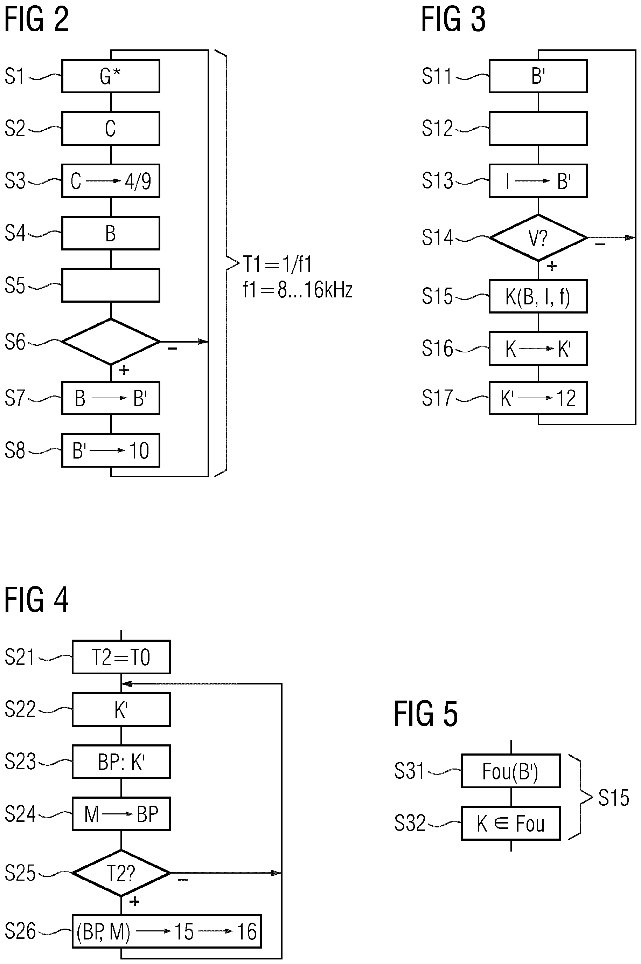

Der Umrichter 4 wird von einer Umrichtersteuerung 6 gesteuert. Die Wirkungsweise der Umrichtersteuerung 6 wird durch erste Befehle 7 eines Steuerprogramms 8 festgelegt. Die Ausführung der ersten Befehle 7 durch die Umrichtersteuerung 6 veranlasst die Umrichtersteuerung 6 dazu, ein Verfahren auszuführen, das nachstehend in Verbindung mit FIG 2 erläutert wird. Das von der Umrichtersteuerung 6 ausgeführte Verfahren umfasst zum einen ein Steuerverfahren für den Umrichter 4, d.h. die Ermittlung von Steuerbefehlen C, mit denen der Umrichter 4 gesteuert wird und mit denen insbesondere Halbleiterschalter 9 des Umrichters 4 gesteuert werden. Das von der Umrichtersteuerung 6 ausgeführte Verfahren umfasst zum anderen einen Teil eines Monitoringverfahrens. Dieses Monitoringverfahren ist der Gegenstand der vorliegenden Erfindung. Das Steuerverfahren als solches ist nicht Gegenstand der vorliegenden Erfindung. Es ist jedoch in vielen Fällen in das Monitoringverfahren eingebunden, genauer in den von der Umrichtersteuerung 6 ausgeführten Teil des Monitoringverfahrens.

Gemäß FIG 2 nimmt die Umrichtersteuerung 6 in einem Schritt S1 Sollgrößen G* für elektrische Größen G entgegen, welche der Umrichter 4 generieren soll. Die elektrischen Größen G können beispielsweise Ströme oder Spannungen sein. Aufbauend auf den Sollgrößen G* ermittelt die Umrichtersteuerung 6 in einem Schritt S2 die Steuerbefehle C und gibt die ermittelten Steuerbefehle C in einem Schritt S3 an den Umrichter 4 bzw. die Halbleiterschalter 9 aus. Entsprechend der Steuerbefehle C werden die Halbleiterschalter 9 des Umrichters 4 gesteuert. Die Halbleiterschalter 9 können nach Bedarf ausgebildet sein. Die Darstellung in FIG 1, gemäß der die Halbleiterschalter 9 als IGBTs ausgebildet sind, ist rein beispielhaft.

Die Schritte S1 bis S3 korrespondieren mit dem Steuerverfahren für den Umrichter 4. Die weiteren Schritte S4 bis S8 von FIG 2 korrespondieren mit dem von der Umrichtersteuerung 6 ausgeführten Teil des Monitoringverfahrens.

Im Schritt S4 erfasst die Umrichtersteuerung 6 Betriebsdaten B des Umrichters 4. Die Betriebsdaten können beispielsweise die elektrischen Größen G und andere Daten umfassen, beispielsweise einen Aussteuergrad der Halbleiterschalter 9. In einem Schritt S5 speichert die Umrichtersteuerung 6 die erfassten Betriebsdaten B. Das Speichern erfolgt derart, dass die Betriebsdaten B zusätzlich zu bereits gespeicherten Betriebsdaten B gespeichert werden. Die bereits gespeicherten Betriebsdaten B werden also nicht verdrängt. Dies gilt zumindest für diejenigen Betriebsdaten B, deren (damaliger) Erfassungszeitpunkt um weniger als eine Erinnerungszeit vom aktuellen Erfassungszeitpunkt beabstandet ist.

Im Schritt S6 prüft die Umrichtersteuerung 6, ob ein Zyklus der Datenerfassung beendet ist. Solange dies nicht der Fall ist, geht die Umrichtersteuerung 6 direkt zum Schritt S1 zurück. Wenn dies hingegen der Fall ist, ermittelt die Umrichtersteuerung 6 im Schritt S7 abgeleitete Werte B'. Die abgeleiteten Werte B' sind auf den jeweiligen Schaltzustand des Umrichters 4 bezogen und zeitlich gefiltert. Es werden also einerseits die Betriebsdaten B, welche auf denselben Schaltzustand des Umrichters 4 bezogen sind, zu einer Gruppe zusammengefasst. Andererseits werden die Betriebsdaten B der jeweiligen Gruppe gefiltert. Die Filterung kann insbesondere eine Tiefpassfilterung sein.

Im Schritt S8 übermittelt die Umrichtersteuerung 6 die abgeleiteten Werte B' an eine Steuereinrichtung 10 (siehe FIG 1). Die Steuereinrichtung 10 ist der Umrichtersteuerung 6 übergeordnet. Die Steuereinrichtung 10 wird daher nachfolgend als übergeordnete Steuereinrichtung bezeichnet. Sofern die Aufteilung in die Umrichtersteuerung 6 und die übergeordnete Steuereinrichtung 10 nicht gegeben ist, kann der Schritt S8 entfallen.

Die Umrichtersteuerung 6 führt die Schritte S1 bis S6 mit einer Zykluszeit T1 immer wieder aus. Der Kehrwert der Zykluszeit T1 korrespondiert mit einer Erfassungsfrequenz f1. Die Erfassungsfrequenz liegt in der Regel bei mehreren kHz, beispielsweise bei 8 kHz oder bei 16 kHz. Die Schritte S7 und gegebenenfalls auch S8 hingegen werden in der Regel seltener ausgeführt, beispielsweise nur nach jeder vierten oder achten Ausführung der Schritte S1 bis S6.

Die Wirkungsweise der übergeordneten Steuereinrichtung 10 (sofern diese als von der Umrichtersteuerung 6 eigenständige Einrichtung vorhanden ist) wird durch zweite Befehle 11 des Steuerprogramms 8 festgelegt. Die Ausführung der zweiten Befehle 11 durch die übergeordnete Steuereinrichtung 10 veranlasst die übergeordnete Steuereinrichtung 10 dazu, ein Verfahren auszuführen, das nachstehend in Verbindung mit FIG 3 erläutert wird. Das von der übergeordneten Steuereinrichtung 10 ausgeführte Verfahren bildet einen weiteren Teil des Monitoringverfahrens.

Gemäß FIG 3 nimmt die übergeordnete Steuereinrichtung 10 in einem Schritt S11 von der Umrichtersteuerung 6 die abgeleiteten Werte B' entgegen. Der Schritt S11 kann analog zum Schritt S8 von FIG 2 gegebenenfalls entfallen.

In einem Schritt S12 speichert die übergeordnete Steuereinrichtung 10 die im Schritt S11 entgegengenommenen (oder ihr sowieso bekannten) abgeleiteten Werte B'. In einem Schritt S13 ordnet die übergeordnete Steuereinrichtung 10 den im Schritt S12 gespeicherten abgeleiteten Werten B' zusätzlich interne Werte I zu. Die internen Werte I können beispielsweise von einem früheren oder gegenwärtigen Zustand einer Anlage abhängen, in welche die Last 1 integriert ist. Im Falle eines früheren Zustands kann es sich beispielsweise um einen Initialzustand handeln. Auch kann es sich bei den internen Werten I um gespeicherte Werte eines weiteren, nicht dargestellten Umrichters handeln. Ein anderes Beispiel für die internen Werte I sind Applikationsinformationen, beispielsweise Prozessgrößen oder Fertigungsverläufe. Ein weiteres Beispiel für die internen Werte I sind Werte aus der Umgebung einer gesteuerten Anlage, beispielsweise eine Temperatur oder eine Luftfeuchtigkeit.

In einem Schritt S14 prüft die übergeordnete Steuereinrichtung 10, ob ein Vollständigkeitskriterium V erfüllt ist. Das Vollständigkeitskriterium V kann beispielsweise erfüllt sein, wenn der Rotor 2 der elektrischen Maschine 1 seit der letzten Ausführung von Schritten S15 bis S17 eine Anzahl an vollständigen Umdrehungen ausgeführt hat. Die Anzahl an Umdrehungen kann bei 1 liegen, sie kann aber auch größer als 1 sein. In anderen Fällen kann eine vorbestimmte Anzahl an Netzperioden aufgetreten sein oder eine vorbestimmte Zeitspanne als solche verstrichen sein. Ist das Vollständigkeitskriterium V nicht erfüllt, geht die übergeordnete Steuereinrichtung 10 zum Schritt S11 zurück. Anderenfalls führt die übergeordnete Steuereinrichtung 10 die Schritte S15 bis S17 aus.

Im Schritt S15 ermittelt die übergeordnete Steuereinrichtung 10 für die zwischengespeicherten abgeleiteten Werte B', die seit der letzten Ausführung der Schritte S15 bis S17 gespeichert wurden, und die zugeordneten internen Werte I Kenngrößen K. Die ermittelten Kenngrößen charakterisieren die Anteile der zwischengespeicherten abgeleiteten Werte B' bei vorbestimmten Frequenzen f. Im Schritt S16 ermittelt die übergeordnete Steuereinrichtung 10 für eine Anzahl an ermittelten Kenngrößen K gefilterte Kenngrößen K'. Die Filterung kann insbesondere eine Tiefpassfilterung sein. Im Schritt S17 übermittelt die übergeordnete Steuereinrichtung 10 die gefilterten Kenngrößen K' an eine Anlagensteuerung 12 (siehe FIG 1). Die Anlagensteuerung 12 ist der übergeordneten Steuereinrichtung 10 übergeordnet. Sie kann nach Bedarf dediziert der übergeordneten Steuereinrichtung 10 zugeordnet sein oder zusätzlich zu der übergeordneten Steuereinrichtung 10 auch anderen Steuereinrichtungen übergeordnet sein. Sofern die Aufteilung in die übergeordnete Steuereinrichtung 10 und die Anlagensteuerung 12 nicht gegeben ist, kann der Schritt S17 entfallen.

Die Wirkungsweise der Anlagensteuerung 12 wird durch dritte Befehle 13 des Steuerprogramms 8 festgelegt. Die Ausführung der dritten Befehle 13 durch die Anlagensteuerung 12 veranlasst die Anlagensteuerung 12 dazu, ein Verfahren auszuführen, das nachstehend in Verbindung mit FIG 4 erläutert wird. Das von der Anlagensteuerung 12 ausgeführte Verfahren bildet den verbleibenden Teil des Monitoringverfahrens.

Gemäß FIG 4 setzt die Anlagensteuerung 12 in einem Schritt S21 eine Zykluszeit T2 auf einen Anfangswert T0.

In einem Schritt S22 nimmt die Anlagensteuerung 12 von der übergeordneten Steuereinrichtung 10 die gefilterten Kenngrößen K' entgegen. Der Schritt S22 kann analog zum Schritt S17 von FIG 3 gegebenenfalls entfallen.

In einem Schritt S23 fasst die Anlagensteuerung 12 die im Schritt S22 entgegengenommenen auf oder ihr sowieso bekannten) gefilterten Kenngrößen K' zu einem Betriebspunkt BP des Umrichters 4 zusammen. In einem Schritt S24 ordnet die Anlagensteuerung 12 dem Betriebspunkt BP Messgrößen M zu. Die Messgrößen M können beispielsweise mittels entsprechender Sensoren 14 (siehe FIG 1) erfasst werden. Die Sensoren 14 sind in der Umgebung des Umrichters 4 angeordnet. Sie können der Anlagensteuerung 12 aber auch auf andere Art und Weise bekannt werden. Die Messgrößen M stammen aus der Umgebung des Umrichters 4. Sie können beispielsweise für die Temperatur, die Luftfeuchtigkeit oder andere thermische Größen charakteristisch sein.

In einem Schritt S25 prüft die Anlagensteuerung 12, ob seit der letzten Ausführung eines Schrittes S26 die Zykluszeit T2 abgelaufen ist. Ist die Zykluszeit T2 nicht abgelaufen, geht die Anlagensteuerung 12 zum Schritt S22 zurück. Anderenfalls führt die Anlagensteuerung 12 den Schritt S26 aus und geht erst dann zum Schritt S22 zurück. Im Schritt S26 übermittelt die Anlagensteuerung 12 mindestens einen Betriebspunkt BP und die zugehörigen Messgrößen M - vorzugsweise über das Internet 15 (siehe FIG 1) - an eine Recheneinrichtung 16. Im Rahmen des Schrittes S26 wird auch ein Timer, der die aufgelaufene Zeit erfasst, zurückgesetzt.

FIG 1 zeigt nicht nur die bevorzugte Ausgestaltung eines Steuerungssystems. In dieser Ausgestaltung umfasst das Steuerungssystem die Umrichtersteuerung 6, die übergeordnete Steuereinrichtung 10 und die Anlagensteuerung 12 umfasst. Es ist jedoch auch möglich, dass die Umrichtersteuerung 6 und die übergeordnete Steuereinrichtung 10 oder die übergeordnete Steuereinrichtung 10 und die Anlagensteuerung 12 zu einer gemeinsamen Einheit zusammengefasst sind. Es ist sogar denkbar, alle drei Komponenten zu einer Einheit zusammenzufassen.

FIG 1 zeigt weiterhin auch eine vorteilhafte Ausgestaltung der Umrichtersteuerung 6. Konkret erfolgt gemäß FIG 1 die Erfassung der Betriebsdaten B des Umrichters 4 mittels eines Mikrochips 17 der Umrichtersteuerung 6. Der Mikrochip 17 ist ein Mikrochip, mittels dessen auch die Steuerbefehle C für die Halbleiterschalter 9 des Umrichters 4 generiert werden. Vorzugsweise erfolgt, wie aus der Darstellung in FIG 1 ersichtlich ist, weiterhin auch die Ermittlung der abgeleiteten Werte B' mittels des Mikrochips 17. Der Mikrochip 17 ist üblicherweise als FPGA oder als ASIC ausgebildet.

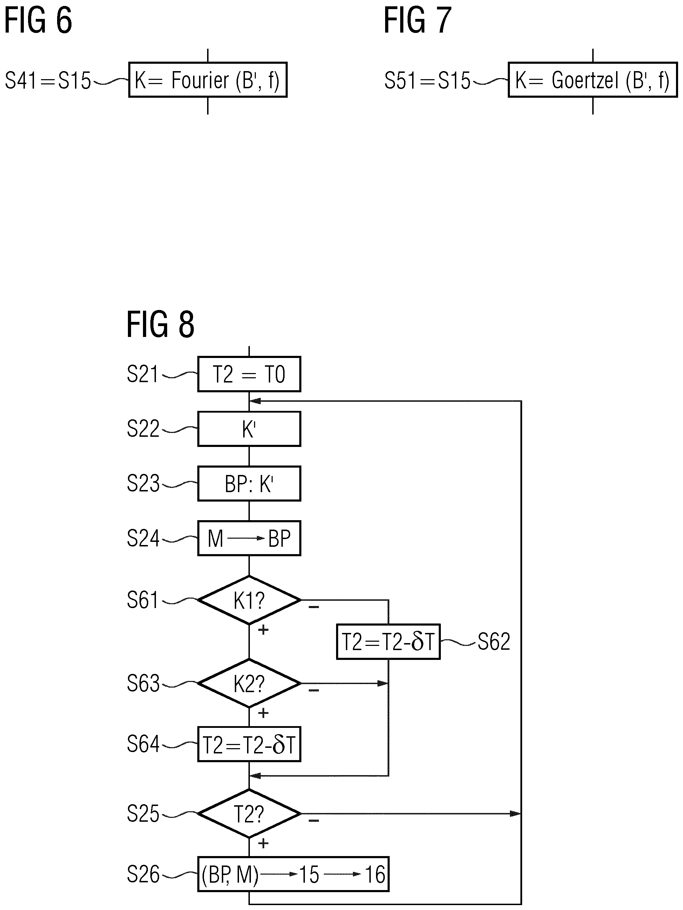

Für die Implementierung des Schrittes S15 von FIG 3 gibt es mehrere Möglichkeiten. So ist es beispielsweise entsprechend der Darstellung in FIG 5 möglich, dass zunächst in einem Schritt S31 eine Fourieranalyse der zwischengespeicherten abgeleiteten Werte B' vorgenommen und so ein Spektrum Fou ermittelt wird. In diesem Fall kann sodann in einem Schritt S32 die Kenngrößen K dadurch ermittelt werden, dass aus dem Spektrum Fou spezifische Werte herausgegriffen werden. Alternativ ist es entsprechend der Darstellung in FIG 6 möglich, dass in einem Schritt S41 als Kenngrößen K von vornherein ausschließlich Fourierkoeffizienten bei den vorbestimmten Frequenzen f ermittelt werden. Wiederum alternativ ist es entsprechend der Darstellung in FIG 7 möglich, dass in einem Schritt S51 die Kenngrößen K durch Anwendung des Goertzel-Algorithmus auf die vorbestimmten Frequenzen f ermittelt werden. Die Ausgestaltungen der FIG 5 bis 7 werden vorliegend durch die übergeordnete Steuereinrichtung 10 implementiert. Bei entsprechender Ausgestaltung des Steuerungssystems können Sie aber auch durch eine andere Einrichtung implementiert werden.

Weiterhin kann auch die Vorgehensweise von FIG 4 in vorteilhafter Weise ausgestaltet werden. Dies wird nachstehend in Verbindung mit FIG 8 erläutert.

FIG 8 geht aus von FIG 4. Zusätzlich sind jedoch Schritte S61 und S62, vorzugsweise auch Schritte S63 und S64 vorhanden.

Im Schritt S61 prüft die Anlagensteuerung 12, ob die zu den jeweiligen Übermittlungszeitpunkten übermittelten Betriebspunkte BP und die zugehörigen Messgrößen M ein Basis-Stabilitätskriterium K1 erfüllen. Beispielsweise kann die Anlagensteuerung 12 Parameter einer Kurvenschar anhand der Betriebspunkte BP und der zugehörigen Messgrößen M ermitteln (fitting) und prüfen, ob die Approximation der Betriebspunkte BP und der zugehörigen Messgrößen M durch die so definierte Kurve mit hinreichender Genauigkeit möglich ist. Beispielsweise kann die Anlagensteuerung 12 prüfen, ob die Abweichungen der Betriebspunkte BP und der zugehörigen Messgrößen M von der ermittelten Kurve eine vorbestimmte Streuung einhalten.

Bei Nichterfüllen des Basis-Stabilitätskriteriums K1 geht die Anlagensteuerung 12 zum Schritt S62 über. Im Schritt S62 verringert die Anlagensteuerung 12 die Zykluszeit T2 und damit den zeitlichen Abstand der Übermittlungszeitpunkte. δT ist hierbei eine geeignet gewählte Schrittweite. Sodann geht die Anlagensteuerung 12 zum Schritt S25 über. Ist das Basis-Stabilitätskriterium K1 hingegen erfüllt, behält die Anlagensteuerung 12 den zeitlichen Abstand T2 der Übermittlungszeitpunkte bei oder vergrößert ihn.

Es ist möglich, dass die Schritte S63 und S64 nicht vorhanden sind. In diesem Fall geht die Anlagensteuerung 12 dann, wenn das Basis-Stabilitätskriterium K1 erfüllt ist, direkt zum Schritt S25 über. Besonders bevorzugt ist jedoch entsprechend der Darstellung in FIG 8, dass die Anlagensteuerung 12 im Schritt S63 prüft, ob die zu den jeweiligen Übermittlungszeitpunkten übermittelten Betriebspunkte BP und die zugehörigen Messgrößen M ein Zusatz-Stabilitätskriterium K2 erfüllen. Beispielsweise kann die Anlagensteuerung 12 prüfen, ob die Abweichungen der Betriebspunkte BP und der zugehörigen Messgrößen M von der ermittelten Kurve eine weitere vorbestimmte Streuung einhalten, wobei jedoch die weitere vorbestimmte Streuung kleiner als die Streuung des Basis-Stabilitätskriteriums K1 ist.

Bei Nichterfüllen des Zusatz-Stabilitätskriteriums K2 geht die Anlagensteuerung 12 direkt zum Schritt S25 über. Ist das Zusatz-Stabilitätskriterium K2 hingegen erfüllt, vergrößert die Anlagensteuerung 12 im Schritt S64 die Zykluszeit T2 und damit den zeitlichen Abstand T2 der Übermittlungszeitpunkte. Erst danach geht die Anlagensteuerung 12 zum Schritt S25 über.

Die vorliegende Erfindung weist viele Vorteile auf. Der größte Vorteil besteht darin, dass trotz einer erheblichen Datenreduktion gewährleistet werden kann, dass die relevante Information bis einschließlich der Übermittlung an die Recheneinrichtung 16 erhalten bleibt. Dennoch wird der Aufwand, der durch die Umrichtersteuerung 6, die übergeordnete Steuereinrichtung 10 und die Anlagensteuerung 12 aufgebracht werden muss, gering gehalten. Durch die Anpassung der Zykluszeit T2 kann zusätzlich gewährleistet werden, dass die an die Recheneinrichtung 16 zu übertragende Datenmenge optimiert werden kann.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Monitoringverfahren für einen Umrichter (4),
- wobei mittels einer Umrichtersteuerung (6) des Umrichters (4) mit einer Erfassungsfrequenz (f1) immer wieder Betriebsdaten (B) des Umrichters (4) erfasst werden,
- wobei aus den erfassten Betriebsdaten (B) des Umrichters (4) abgeleitete Werte (B') ermittelt werden, die auf den jeweiligen Schaltzustand des Umrichters (4) bezogen und zeitlich gefiltert sind,
- wobei die abgeleiteten Werte (B') für eine durch ein Vollständigkeitskriterium (V) bestimmte Zeitspanne gespeichert werden,
- wobei den gespeicherten abgeleiteten Werten (B') zusätzlich interne Werte (I) zugeordnet werden,
- wobei für die zwischengespeicherten abgeleiteten Werte (B') der durch das Vollständigkeitskriterium (V) vorbestimmten Zeitspanne und die zugeordneten internen Werte (I) Kenngrößen (K) ermittelt werden, die Anteile der zwischengespeicherten abgeleiteten Werte (B') bei vorbestimmten Frequenzen (f) charakterisieren,
- wobei für eine Anzahl an ermittelten Kenngrößen (K) gefilterte Kenngrößen (K') ermittelt werden,
- wobei die gefilterten Kenngrößen (K') zu einem Betriebspunkt (BP) des Umrichters (4) zusammengefasst werden und dem Betriebspunkt (BP) weiterhin aus der Umgebung des Umrichters (4) stammende erfasste Messgrößen (M) zugeordnet werden und
- wobei mindestens ein Betriebspunkt (BP) und die zugehörigen Messgrößen (M) zu einem jeweiligen Übermittlungszeitpunkt an eine Recheneinrichtung (16) übermittelt wird.

2. Monitoringverfahren nach Anspruch 1,
**dadurch gekennzeichnet,**
**dass** die Erfassung der Betriebsdaten (B) des Umrichters (4) mittels eines Mikrochips (17) der Umrichtersteuerung (6) erfolgt, mittels dessen Steuerbefehle (C) für Halbleiterschalter (9) des Umrichters (4) generiert werden.

3. Monitoringverfahren nach Anspruch 2,
**dadurch gekennzeichnet,**
**dass** die Ermittlung der abgeleiteten Werte (B') mittels des Mikrochips (17) erfolgt.

4. Monitoringverfahren nach Anspruch 1, 2 oder 3,
**dadurch gekennzeichnet,**
**dass** die Kenngrößen (K) mittels einer Fourieranalyse und nachfolgendem Herausgreifen spezifischer Werte eines mittels der Fourieranalyse ermittelten Spektrums (Fou) oder durch die Ermittlung ausschließlich von Fourierkoeffizienten bei den vorbestimmten Frequenzen (f) oder durch Anwendung des Goertzel-Algorithmus auf die vorbestimmten Frequenzen (f) ermittelt werden.

5. Monitoringverfahren nach einem der obigen Ansprüche,
**dadurch gekennzeichnet,**
- **dass** geprüft wird, ob die zu den jeweiligen Übermittlungszeitpunkten übermittelten Betriebspunkte (BP) und zugehörigen Messgrößen (M) ein Basis-Stabilitätskriterium (K1) erfüllen,
- **dass** bei Nichterfüllen des Basis-Stabilitätskriteriums (K1) ein zeitlicher Abstand der Übermittlungszeitpunkte verringert wird und
- **dass** bei Erfüllen des Basis-Stabilitätskriteriums (K1) der zeitliche Abstand der Übermittlungszeitpunkte beibehalten oder vergrößert wird.

6. Monitoringverfahren nach Anspruch 5,
**dadurch gekennzeichnet,**
- **dass** in dem Fall, dass die zu den jeweiligen Übermittlungszeitpunkten übermittelten Betriebspunkte (BP) und zugehörigen Messgrößen (M) das Basis-Stabilitätskriterium (K1) erfüllen, geprüft wird, ob die zu den jeweiligen Übermittlungszeitpunkten übermittelten Betriebspunkte (BP) und zugehörigen Messgrößen (M) ein Zusatz-Stabilitätskriterium (K2) erfüllen,
- **dass** bei Nichterfüllen des Zusatz-Stabilitätskriteriums (K2) der zeitliche Abstand der Übermittlungszeitpunkte beibehalten wird und
- **dass** bei Erfüllen des Zusatz-Stabilitätskriteriums (K2) der zeitliche Abstand der Übermittlungszeitpunkte wird.

7. Steuerprogramm für ein Steuerungssystem, wobei das Steuerprogramm Befehle (7, 11, 13) umfasst, die bei ihrer Ausführung durch das Steuerungssystem das Steuerungssystem veranlassen, die Schritte eines Monitoringverfahrens nach einem der obigen Ansprüche auszuführen.

8. Steuerungssystem, wobei das Steuerungssystem mit einem Steuerprogramm (8) nach Anspruch 7 programmiert ist, so dass das Steuerungssystem im Betrieb ein Monitoringverfahren nach einem der Ansprüche 1 bis 6 ausführt.
